# EUROPÄISCHE PATENTSCHRIFT

(11) **EP 1 655 590 B1**
(45) Veröffentlichungstag und Bekanntmachung des Hinweises auf die Patenterteilung: **03.02.2016**
(21) Anmeldenummer: 05110175.6
(22) Anmeldetag: 31.10.2005
(51) Int. Cl.: G01K 3/06, F02C 9/28

(54) **Verfahren zur Bestimmung einer über einen Strömungsquerschnitt massengemittelten Temperatur einer Gasströmung in einer Gasturbine**
Method for determining the mass averaged temperature across a flow section of a gas stream in a gas turbine
Procédé destiné à déterminer la température, calculée sur la masse d'une section d'un flux de gaz dans une turbine à gaz

(30) Priorität: 09.11.2004 CH 18412004
(43) Veröffentlichungstag der Anmeldung: 10.05.2006
(73) Patentinhaber: ALSTOM Technology Ltd, 5400 Baden (CH)
(72) Erfinder: Lilley, Darrel Shayne, 5454, Bellikon (CH); Nemet, Anton, 5415, Nussbaumen (CH); Rüter, Andreas, 5400, Baden (CH)
(74) Vertreter: General Electric Technology GmbH

(56) Entgegenhaltungen:
- EP-A- 0 728 919
- DE-A1- 1 476 778
- DE-A1- 1 601 556
- US-A- 3 990 308
- US-A- 5 080 496

## Beschreibung

### Technisches Gebiet

Die Erfindung betrifft ein Verfahren zur Bestimmung einer über einen Strömungsquerschnitt massengemittelten Temperatur einer Gasströmung in einer Gasturbine, insbesondere einer über den Strömungsquerschnitt massengemittelten Turbinenaustrittstemperatur der Gasströmung der Gasturbine. Ferner betrifft die Erfindung eine Regelungsvorrichtung, in der ein solches Verfahren anwendbar ist.

### Stand der Technik

Heutige Regelungsverfahren von Gasturbinenanlagen, Gasturbinen, Gasturbogruppen oder dergleichen verwenden oftmals neben anderen Regeleingangsgrößen die Turbinenaustrittstemperatur als eine für die Regelung bedeutsame Regeleingangsgröße. So kann beispielsweise ausgehend von der Turbinenaustrittstemperatur unter Berücksichtigung des Enthalpieumsatzes in der Turbine auf die Turbineneintrittstemperatur rückgeschlossen werden, die aufgrund einer maximal zulässigen Materialtemperatur der Beschaufelung der Turbine die Feuerungstemperatur der Gasturbine nach oben limitiert.

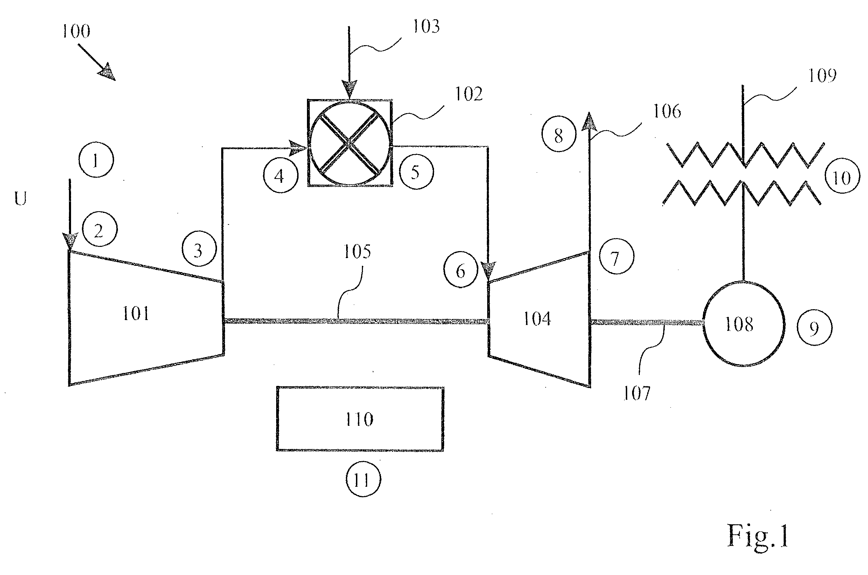

In Figur 1 ist der Aufbau einer solchen Gasturbinenanlage 100 beispielhaft in schematischer Darstellung wiedergegeben. Die hier dargestellte stationäre Gasturbinenanlage 100 umfasst einen Verdichter 101, der eingangsseitig Luft aus der Umgebung U ansaugt und diese verdichtet. Der Verdichter 101 ist über eine Welle 105 mit einer Turbine 104 drehfest antriebsverbunden. In dem Gaspfad zwischen Verdichter 101 und Turbine 104 ist eine Brennkammer 102 angeordnet, die zur Feuerung über die Brennstoffzuleitung 103 mit Brennstoff beschickt wird. Nach dem Durchtritt durch die Turbine 104 entströmt das Gasgemisch über eine Abgasleitung 106 in die Umgebung U. Die Turbine 104 wiederum ist über eine Welle 17 mit einem Generator 108 antriebsverbunden. Im Betrieb der Gasturbinenanlage 100 erzeugt der von der Turbine 104 angetriebene Generator 108 Strom, der über eine Stromleitung und einen Transformator in ein elektrisches Netz 109 abgeführt wird. Um insbesondere während der Hochlaufphase der Gasturbinenanlage 100 Anlagenkomponenten mit Strom versorgen zu können, ist im Anlagenverbund zusätzlich ein Stromversorgungsaggregat 110 angeordnet.
Ferner sind in Figur 1 die Eintritts- und Austrittsebenen der Gasturbinenanlage 100 gemäß ASME-Standard in Durchströmrichtung der Gasturbine mit einer jeweils in einem Kreis befindlichen Nummerierung von 1 bis 11 gekennzeichnet.

Um die Turbinenaustrittstemperatur messen zu können, sind in der Turbinenaustrittsebene oder in einem stromab angeordneten Plenum üblicherweise Thermoelemente installiert, die in die Gasströmung hineinragen. Die Anordnung der Thermoelemente erfolgt zweckmäßig gemäß internationalen Richtlinien. Da die so erfasste Turbinenaustrittstemperatur jedoch eine für die Regelung der Gasturbine sehr bedeutsame Eingangsgröße bildet, sind hier besonders hohe Anforderungen an die Genauigkeit der Instrumentierung, der Justierung der Instrumentierung, der Datenerfassung und Datenreduktion sowie auch an die Filterung zufälliger Messfehler zu stellen.
Die von den Thermoelementen erfassten Temperaturwerte werden nach der sensorischen Erfassung über eine Massenwichtung gemittelt, um so auf eine über den Strömungsquerschnitt massengemittelte Turbinenaustrittstemperatur schließen zu können. Die Turbineneintrittstemperatur bzw. die Brennkammeraustrittstemperatur wird dann ausgehend von der massengemittelten Turbinenaustrittstemperatur über eine Wärmebilanzierung gemäß dem internationalen ISO-Standard 2314:1989 oder dem amerikanischen nationalen ASME-Standard PTC 22-1997 erhalten.

In der ASME PTC 22-1997 ist hierzu vorgesehen, dass der Gasturbinen-Hersteller die Anzahl und die Position der in der Turbinenaustrittsebene oder dem stromab der Turbine angeordneten Plenum installierten Temperaturerfassungselemente festlegt. Bekannte systembedingte räumliche Abweichungen sind hierbei zu berücksichtigen. Abgestimmt auf diese Temperatur-Messstellen soll der Gasturbinen-Hersteller im Weiteren für den Auslegungsbetriebsfall eine Funktion zwischen der gemittelten gemessenen Turbinenaustrittstemperatur und der Turbineneintrittstemperatur bestimmen.

In der praktischen Umsetzung werden Gasturbinen in der Regel so ausgelegt, dass eine Ungleichförmigkeit der radialen Strömungsverteilung in der Turbinenaustrittsebene oder im Plenum stromab der Turbine wenigstens für den Auslegungsbetriebspunkt, d.h. in der Regel den Volllastpunkt, minimiert ist. Daher stimmt die gemessene Turbinenaustrittstemperatur üblicherweise weitgehend mit dem massengewichteten Temperaturdurchschnittswert überein.
Weicht jedoch der Betriebspunkt der Gasturbine von dem Auslegungsbetriebspunkt ab, so wirkt sich der Effekt der sich radial ungleichförmig ausbildenden Strömungs- bzw. Temperaturverteilung teilweise erheblich auf die massengewichtete Temperatur in der Turbinenaustrittsebene oder dem Turbinenaustrittsplenum aus. Dieser Effekt ist physikalisch durch die Expansion der Turbinenströmung in radialer Richtung bedingt. Wird nun auf Basis eines gemessenen Temperaturwertes mittels der nach ASME PTC 22-1997 ermittelten Korrelation eine mittlere Temperatur der Turbinenaustrittsströmung errechnet, so weicht die in dieser Weise ermittelte mittlere Temperatur insbesondere im Teillastbereich der Gasturbine teilweise erheblich von der real vorliegenden massengemittelten Temperatur ab. Die Abweichung kann hierbei bis zu einigen 10 Kelvin betragen. Wird nun weiterhin die in dieser Weise nach ASME PTC 22-1997 ermittelte mittlere Temperatur als Eingangsgröße für eine Regelung der Gasturbine, beispielsweise für eine Regelung des Brennstoffstoffmassenstroms der Gasturbine, verwendet, so weicht die real vorliegende Regelung folglich auch teilweise erheblich von einer gewünschten Soll-Regelung ab. Insbesondere im Teillastbereich ist daher bei heutigen Gasturbinenanlage oftmals keine präzise Regelung möglich, da eine hohe Unsicherheit bzw. Schwankungsbreite der Regeleingangsgröße zu berücksichtigen ist. In der Praxis bedeutet dies, dass größere Sicherheitsabstände zu Temperaturgrenzen eingehalten werden müssen, wodurch beispielsweise ein Hochfahren der Gasturbine nur langsamer vorgenommen werden kann, als dies eigentlich möglich wäre.

In der EP 0 728 919 ist ein Verfahren sowie eine Vorrichtung zur Regelung der einer Brennkammer zuzuführenden Brennstoffmenge einer Gasturbine offenbart. Zur Ermittlung der zuzuführenden Brennstoffmenge wird die Abgastemperatur EGT mittels Thermoelementen gemessen und hieraus unter Berücksichtigung eines Temperaturmaximalwertes die zuzuführende Brennstoffmenge ermittelt. Um auch im Falle transienter Vorgänge der Gasturbine die zuzuführende Brennstoffmenge präzise einregeln zu können, wird die gemessene Temperatur EGT korrigiert, was zum Erhalt einer korrigierten Temperatur EGT_{corrected} führt. Die Korrektur erfolgt auf Basis des gemessenen Verdichteraustrittsdrucks CDP, eines zeitlichen Verzögerungsglieds, eines Subtrahierers , eines Verstärkungselements sowie eines Addierers.

### Darstellung der Erfindung

Hier will die Erfindung Abhilfe schaffen. Der Erfindung liegt somit die Aufgabe zugrunde, ein Verfahren der eingangs genannten Art anzugeben, mit dem die Nachteile des Standes der Technik vermindert oder vermieden werden. Des Weiteren soll durch die Erfindung eine Regelungsvorrichtung, die mit dem Verfahren betreibbar ist, zur Verfügung gestellt werden.
Die Erfindung trägt insbesondere dazu bei, eine über den Strömungsquerschnitt massengemittelten Turbinenaustrittstemperatur einer Gasturbine oder dergleichen mit hoher Genauigkeit auch für vom Auslegungsbetriebspunkt abweichende Betriebspunkte zu bestimmen.

Diese Aufgabe wird erfindungsgemäß durch das Verfahren gemäss Anspruch 1 sowie die Regelungsvorrichtung gemäss dem unabhängigen Vorrichtungsanspruch 15 gelöst. Weitere vorteilhafte Ausgestaltungen der Erfindung finden sich in den Unteransprüchen.

Das erfindungsgemäße Verfahren zur Bestimmung einer über einen Strömungsquerschnitt massengemittelten Temperatur der Gasströmung einer Gasturbine, insbesondere zur Bestimmung einer über den Turbinenaustrittsquerschnitt massengemittelten Turbinenaustrittstemperatur, umfasst, im Bereich der Strömungsquerschnittsebene an wenigstens einer Position im Gasströmung einen Temperaturwert sensorisch zu erfassen, einen Korrekturwert zur Korrektur des Temperaturwertes zur Kompensation von Ungleichförmigkeiten des Temperaturprofils der Gasströmung über den Strömungsquerschnitt als Funktion wenigstens eines betriebspunktspezifischen Parameters zu ermitteln, und den sensorisch erfassten Temperaturwert um den Korrekturwert zu korrigieren.
Im Bereich der Strömungsquerschnittsebene bedeutet entweder in der Strömungsquerschnittsebene selbst oder in einem Plenum, das sich stromab der Strömungsquerschnittsebene an diese anschließt.
Es zeigte sich, dass das erfindungsgemäß ausgebildete Verfahren insbesondere im Teillastbereich der Gasturbine eine genauere Bestimmung der über den Strömungsquerschnitt massengemittelten Temperatur, insbesondere der über den Turbinenaustrittsquerschnitt massengemittelten Turbinenaustrittstemperatur, ermöglicht, als dies mit aus dem Stand der Technik bekannten Verfahren möglich ist. Als Folge hiervon kann beispielsweise eine Regelung, bei der die massengemittelte Turbinenaustrittstemperatur eine Regeleingangsgröße bildet, auch im Teillastbereich mit geringeren Sicherheitsmargen zu kritischen Betriebspunkten hin betrieben werden. Die bisher erforderlichen Sicherheitsmargen können demzufolge deutlich minimiert werden, was zu einer höheren Effizienz und verbesserten Dynamik der Gasturbine führt.
Aufgrund dessen, dass gemäß dem erfindungsgemäß ausgebildeten Verfahren der Korrekturwert als Funktion wenigstens eines betriebspunktspezifischen Parameters ermittelt wird, sind betriebspunktspezifische Ungleichförmigkeiten der Strömungs- und Temperaturverteilung über die Höhe des Strömungskanals implizit in dem Korrekturwert berücksichtigt. Die sich über den Betriebsbereich einer Gasturbine ausbildenden Ungleichförmigkeiten der Strömungs- und Temperaturverteilung über die Höhe des Strömungskanals können hierzu vorab entweder mittels Referenzmessungen oder mittels CFD-Berechriungen als Funktion des wenigstens einen betriebspunktspezifischen Parameters ermittelt werden. Die Durchführung derartiger Referenzmessungen oder CFD-Berechnungen sind dem Fachmann geläufig. Für die Durchführung von Referenzmessungen ist eine aufwändige Instrumentierung mit kombinierter Messung wenigstens der Temperatur sowie des Druckes in der betreffenden Strömungsebene oder in einem Plenum stromab der Strömungsebene, beispielsweise der Turbinenaustrittsebene oder dem Plenum stromab der Turbinenaustrittsebene, erforderlich. Auch ist Temperatur- und Druckmessung über die Höhe des Strömungskanals gestaffelt sowie vorzugsweise auch am Umfang verteilt vorzunehmen, wobei die Sensorsignale jeweils möglichst zeitgleich zu erfassen sind. Daher kann es mit geringerem Aufwand verbunden sein, die sich ausbildenden Temperaturprofile mittels CFD-Berechnungen zu ermitteln.

Zweckmäßig umfasst der erste Verfahrensschritt des erfindungsgemäß ausgebildeten Verfahrens, eine Mehrzahl von am Turbinenaustritt verteilten Einzeltemperaturwerten sensorisch zu erfassen und die erfassten Einzeltemperaturwerte zu einem Temperaturwert zu mitteln. Durch die Messung einer Mehrzahl von Einzeltemperaturwerten mit anschließender Mittelung der Einzeltemperaturwerte lassen sich stochastisch verteilte Temperaturschwankungen sowie auch Fehlfunktionen einzelner Sensoren weitgehend eliminieren.

Gemäß einer vorteilhaften Weiterbildung der Erfindung wird als ein betriebspunktspezifischer Parameter der durch den Strömungsquerschnitt strömende Gasmassenstrom verwendet. Es stellte sich heraus, dass der durch den Strömungsquerschnitt strömende Gasmassenstrom ein geeignetes Maß für die Ausbildung von Ungleichförmigkeiten der Strömung darstellt. Somit lässt sich die Ungleichförmigkeit der Strömung als Funktion nur einer Variablen beschreiben. Gemäß einer weiteren vorteilhaften Weiterbildung der Erfindung wird als ein betriebspunktspezifischer Parameter der durch den Strömungsquerschnitt strömende, reduzierte Gasmassenstrom verwendet.
Gemäß einer weiteren vorteilhaften Weiterbildung der Erfindung wird als ein betriebspunktspezifischer Parameter der totale absolute oder statische absolute Druck am Verdichteraustritt der Gasturbine und/oder der totale oder statische Atmosphärenüberdruck am Verdichteraustritt der Gasturbine verwendet. Der sensorische Aufwand für eine Druckmessung ist verhältnismäßig gering.
Gemäß einer weiteren vorteilhaften Weiterbildung der Erfindung wird als ein betriebspunktspezifischer Parameter das Turbinendruckverhältnis verwendet.

Die oben aufgeführten betriebspunktspezifischen Parameter können zur Bestimmung des Korrekturwertes entweder jeweils alleine oder auch in Kombination miteinander verwendet werden. Bei Verwendung mehrerer betriebspunktspezifischer Parameter zur Bestimmung des Korrekturwertes steigt jedoch der Aufwand für die vorab durchzuführenden Referenzmessungen bzw. CFD-Berechnungen erheblich. Demgegenüber nimmt die Erhöhung der Genauigkeit je weiterem hinzugenommenen betriebspunktspezifischen Parameter ab.

Wird als betriebspunktspezifischer Parameter der durch den Strömungsquerschnitt strömende Gasmassenstrom oder der durch den Strömungsquerschnitt strömende, reduzierte Gasmassenstrom am Turbinenaustritt verwendet, so wird zweckmäßig wenigstens ein Zustandsparameter der Gasturbine sensorisch erfasst und der durch den Strömungsquerschnitt strömende Gasmassenstrom und/oder der durch den Strömungsquerschnitt strömende, reduzierte Gasmassenstrom auf Basis des wenigstens einen Zustandsparameters ermittelt.
Bevorzugt wird als Zustandsparameter die Wellendrehzahl der Gasturbine sensorisch erfasst. Mittels einer vorab ermittelten Korrelation zwischen Drehzahl und Massenstrom kann dann anhand der gemessenen Drehzahl der Massenstrom bestimmt werden. Die Drehzahl des Verdichters lässt sich in der Regel mit geringem sensorischen Aufwand ermitteln. Insbesondere für Anwendungsfälle, in denen aus anderen Gründen regelungsseitig Sicherheitsmargen eingehalten werden müssen, kann die allein auf Basis der Drehzahl ermittelte Genauigkeit des Massenstroms ausreichend sein.

In anderen Anwendungsfällen kann es aber durchaus zweckmäßig sein, weiterhin wenigstens eine der folgenden Größen bzw. Größenpaare als Zustandsparameter sensorisch zu erfassen und zur Bestimmung des Massenstroms in der Turbinenaustrittsebene und/oder des reduzierten Massenstroms in der Turbinenaustrittsebene zu verwenden:
- Umgebungsdruck; und/oder
- Umgebungstemperatur und Verdichtereintrittstemperatur und/oder Umgebungstemperatur und relative oder absolute Feuchte der Umgebung; und/oder
- Eintrittsdruckverlust von Umgebung bis Verdichtereintritt; und/oder
- Brennstoffmassenstrom; und/oder
- bei Eindüsung von Wasser innerhalb der Gasturbine: die eingedüste Wassermenge; und/oder
- bei variablen Eintrittsleitschaufeln des Verdichters der Gasturbine: die Position der variablen Eintrittsleitschaufeln.
Insbesondere durch die sensorische Erfassung und Verarbeitung aller weiterer Zustandsparameter kann der Massenstrom und somit letztlich die Turbinenaustrittstemperatur sehr genau bestimmt werden.

Zur Bestimmung des reduzierten Massenstroms wird darüber hinaus zweckmäßig weiterhin wenigstens eine der folgenden Größen bzw. Größenpaare als Zustandsparameter sensorisch erfasst und zur Bestimmung des reduzierten Massenstroms verwendet oder fließen in die Bestimmung des Korrekturwertes ein:
- absoluter Druck am Turbinenaustritt; und/oder
- Druckverlust der Gasströmung zwischen Turbinenaustritt und Auslaß der Gasturbine.

Wird als betriebspunktspezifischer Parameter der totale absolute oder statische absolute Druck am Verdichteraustritt der Gasturbine und/oder der totale oder statische Atmosphärenüberdruck am Verdichteraustritt der Gasturbine verwendet, so wird zweckmäßig der totale absolute oder statische absolute Druck am Verdichteraustritt der Gasturbine und/oder der totale oder statische Atmosphärenüberdruck am Verdichteraustritt der Gasturbine als Zustandsparameter der Gasturbine sensorisch erfasst und unmittelbar zur Bestimmung des Korrekturwertes verwendet.
Insbesondere der statische Druck lässt sich mit geringem Aufwand über eine Wanddruckbohrung und eine hieran angeschlossene Druckmessdose ermitteln.

Zur Erhöhung der Genauigkeit der Korrekturwert-Bestimmung wird vorzugsweise zusätzlich noch der Umgebungsdruck als Zustandsparameter der Gasturbine sensorisch erfasst, der dann ebenso in die Bestimmung des Korrekturwertes einfließt.

Wird als betriebspunktspezifischer Parameter das Turbinendruckverhältnis verwendet, so wird zweckmäßig der totale absolute oder statische absolute Druck am Turbineneintritt der Gasturbine und der totale absolute oder statische absolute Druck am Turbinenaustritt der Gasturbine sensorisch erfasst und unmittelbar zur Bestimmung des Turbinendruckverhältnisses verwendet.
Zur Erhöhung der Genauigkeit des Korrekturwertes wird hierzu vorzugsweise noch weiterhin wenigstens eine der folgenden Größen bzw. Größenpaare als. Zustandsparameter sensorisch erfasst und zur Bestimmung des Korrekturwertes verwendet:
- Umgebungsdruck; und/oder
- Druckverlust der Gasströmung zwischen dem Turbinenaustritt und dem Auslaß aus der Gasturbine; und/oder
- Druckverlust der Gasströmung zwischen Verdichteraustritt und Turbineneintritt; und/oder
- totaler absoluter oder statischer absoluter Druck am Verdichteraustritt und/oder totaler oder statischer Atmosphärendruck am Verdichteraustritt.

In einem weiteren Aspekt stellt die Erfindung eine Regelungsvorrichtung zur Regelung einer Gasturbinenanlage, einer Gasturbine, einer Gasturbogruppe oder dergleichen zur Verfügung. Die erfindungsgemäße Regelungsvorrichtung ist zur Bestimmung einer über einen Strömungsquerschnitt massengemittelten Temperatur einer Gasströmung, insbesondere einer über den Turbinenaustrittsquerschnitt massengemittelten Turbinenaustrittstemperatur der Gasströmung einer Gasturbine oder dergleichen, gemäß dem oben beschriebenen Verfahren betreibbar. Die Regelungsvorrichtung umfasst hierzu neben einer Berechnungs- und Regelungseinheit eine geeignete Sensorik sowie eine Aktuatorik. Die Sensorik umfasst wenigstens einen Sensor entsprechend der Ausgestaltung des Verfahrens, wobei das Sensorsignal der Berechnungs- und Regelungseinheit zugeführt wird. Auf Basis der der Berechnungs- und Regelungseinheit zugeführten Sensorsignale wird dann in der Berechnungs- und Regelungseinheit die Turbinenaustrittstemperatur errechnet. Ausgehend von der so ermittelten Turbinenaustrittstemperatur wird entweder zusätzlich in einem Zwischenschritt auf die Turbineneintrittstemperatur rückgeschlossen und hieraus ein Regelwert abgeleitet oder unmittelbar der Regelwert abgeleitet. Der Regelwert kann in bekannter Weise auch noch von weiteren Eingangsgrößen, beispielsweise dem Vorgabewert eines Bedieners, abhängig sein. Der so ermittelte Regelwert wird dann von der Berechnungs- und Regelungseinheit der Aktuatorik, beispielsweise einem Ventil zur Regelung des Brennstoffzuflusses, zugeführt, wodurch eine dem Regelwert entsprechende Aktion des jeweiligen Aktuators bewirkt wird.

### Kurze Beschreibung der Zeichnungen

Die Erfindung wird nachfolgend anhand eines in den Figuren illustrierten Ausführungsbeispiels näher erläutert. Es zeigen:
- Figur 1: eine schematische Darstellung einer Gasturbinenanlage (Stand der Technik);
- Figur 2: eine erste Ausführungsform des erfindungsgemäßen Verfahrens in einem Ablaufschema;
- Figur 3: eine zweite Ausführungsform des erfindungsgemäßen Verfahrens in einem Ablaufschema;
- Figur 4: eine dritte Ausführungsform des erfindungsgemäßen Verfahrens in einem Ablaufschema.

In den Figuren sind nur die für das Verständnis der Erfindung wesentlichen Elemente und Bauteile dargestellt.

Das dargestellte Ausführungsbeispiel ist rein instruktiv zu verstehen und soll einem besseren Verständnis, aber nicht einer Einschränkung des Erfindungsgegenstandes dienen.

### Wege zur Ausführung der Erfindung

In Figur 1 ist in schematisierter Darstellung eine Gasturbinenanlage bzw. eine Gasturbogruppe 100 dargestellt, wie sie dem Fachmann geläufig ist. Die Gasturbinenanlage 100 ist hier als stationäre Gasturbinenanlage ausgeführt und dient der Stromerzeugung.
Wie bereits oben beschrieben, umfasst die hier beispielhaft dargestellte stationäre Gasturbinenanlage 100 einen Verdichter 101, der eingangsseitig Luft aus der Umgebung U ansaugt und diese verdichtet. Der Verdichter 101 ist über eine Welle 105 mit einer Turbine 104 drehfest antriebsverbunden. In dem Gaspfad zwischen Verdichter 101 und Turbine 104 ist eine Brennkammer 102 angeordnet, die zur Feuerung über die Brennstoffzuleitung 103 mit Brennstoff beschickt wird. Nach dem Durchtritt durch die Turbine 104 entströmt das Luft-Brenngas-Gemisch über eine Abgasleitung 106 in die Umgebung. Die Turbine 104 ist über eine weitere Welle 107 mit einem Generator 108 antriebsverbunden. Die Wellen 105 und 107 können auch einteilig ausgeführt sein. Im Betrieb der Gasturbinenanlage 100 erzeugt der von der Turbine 104 angetriebene Generator 108 Strom, der über eine Stromleitung und einen Transformator in ein elektrisches Netz 109 abgeführt wird. Um insbesondere in der Hochlaufphase der Gasturbinenanlage 100 Anlagenkomponenten mit Strom versorgen zu können, ist der Anlage des Weiteren ein Stromversorgungsaggregat 110 zugeordnet.
Weiterhin sind in Figur 1 die Eintritts- und Austrittsebenen der Gasturbinenanlage gemäß ASME-Standard in Durchströmrichtung der Gasturbine mit einer Nummerierung von 1 bis 11 gekennzeichnet.
Selbstverständlich ist es auch möglich, die Gasturbinenanlage mehrwellig, mit mehreren Turbinen und zwischengeordneten Brennkammern, mit mehreren Verdichtern und zwischengeordneten Kühlern, und dergleichen auszuführen. Diese Ausführungsformen sind dem Fachmann geläufig und stellen die Erfindung lediglich in einen anwendungsrelevanten Kontext, weshalb sie an dieser Stelle nicht weiter beschrieben werden.

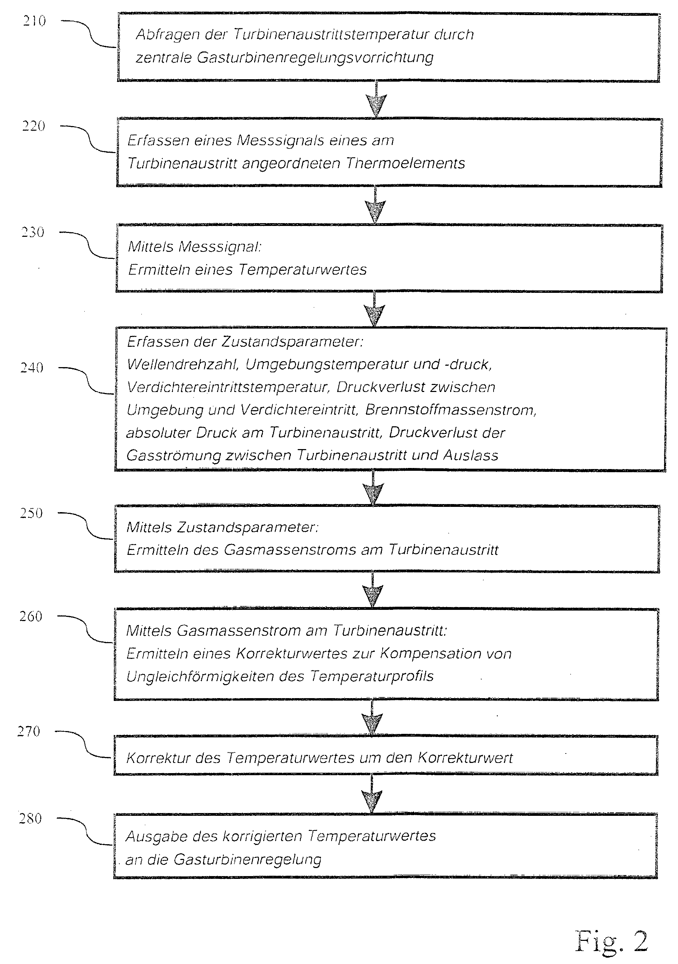

In den Figuren 2, 3 und 4 sind erfindungsgemäß ausgeführte Verfahrensabläufe zur Bestimmung einer über den Strömungsquerschnitt massengemittelten Turbinenaustrittstemperatur in einer Gasturbine jeweils als Ablaufschema dargestellt. Die hier dargestellten Verfahrensabläufe sind hier jeweils als integrale Bestandteile der Regelkreisabläufe einer Gasturbinenregelungsvorrichtung ausgebildet. Wie in den Figuren 2, 3 und 4 dargestellt bedeutet dies, dass der Verfahrensablauf zur Bestimmung der massengemittelten Turbinenaustrittstemperatur jeweils in den Verfahrensschritten 210, 310 bzw. 410 von der Gasturbinenregelung initiiert wird und das ermittelte Ergebnis jeweils in den Verfahrensschritten 280, 380 bzw. 480 an die Gasturbinenregelung zur Weiterverarbeitung übergeben wird. Auch wenn gemäß den in den Figuren 2, 3 und 4 dargestellten Ablaufvorgängen das erfindungsgemäß ausgebildete Verfahren grundsätzlich auch außerhalb der Gasturbinenregelungsvorrichtung ablaufen kann, so umschließt die Erfindung natürlich auch die Möglichkeit, das erfindungsgemäße Verfahren als integralen Teil des Regelungsverfahrens der Gasturbinenanlage innerhalb der Gasturbinenregelungsvorrichtung abzuarbeiten.

In Figur 2 wird nach dem Starten des Verfahrensablaufs gemäß Verfahrensschritt 210 in einem nachfolgenden Verfahrensschritt 220 zunächst ein Messsignal eines Thermoelements, dessen temperatursensitive Messperle in der Turbinenaustrittsebene in den Gasströmung hineinragt, erfasst. Anschließend wird ausgehend von dem erfassten Messsignal des Thermoelements in Verfahrensschritt 230 hieraus ein Temperaturwert errechnet, der dann jedoch nur die Temperatur an der Messstelle selbst wiedergibt. Ungleichförmigkeiten des Temperaturprofils, wie diese üblicherweise insbesondere in radialer Richtung des Strömungskanals vorliegen, sind hier jedoch nicht erfasst. Auch die aus dem Stand der Technik bekannten Korrekturverfahren beispielsweise gemäß der oben beschriebenen Korrelation nach ASME PTC 22-1997 liefern insbesondere im Teillastbereich der Gasturbine relativ ungenaue Temperaturwerte. Eine hierauf aufsetzende Regelung der Gasturbine ist somit gezwungen, relativ große Sicherheitsmargen einzuhalten. Um nun im Vergleich zu den aus dem Stand der Technik bekannten Verfahren eine verbesserte Messwertkorrektur vornehmen zu können, werden in dem in Figur 2 dargestellten Ausführungsbeispiel in Verfahrensschritt 240 die Zustandsparameter Wellendrehzahl der Gasturbine, Umgebungstemperatur und Umgebungsdruck, Verdichtereintrittstemperatur, Brennstoffmassenstrom, absoluter Druck am Turbinenaustritt sowie der Druckverlust der Gasströmung zwischen Turbinenaustritt und Auslaß der Gasturbine sensorisch erfasst. Zusätzlich wird im Falle von Wassereindüsung in den Verdichter oder die Brennkammer die eingedüste Wassermenge sowie im Falle von variablen Eintrittsleitschaufeln des Verdichters die Position der variablen Eintrittsleitschaufeln sensorisch erfasst.
Mittels der sensorisch erfassten Zustandsparameter wird in Verfahrensschritt 250 der Gasmassenstrom in der Turbinenaustrittsebene als betriebspunktspezifischer Parameter ermittelt. Der Gasmassenstrom wiederum geht in Verfahrensschritt 260 zur Bestimmung eines Temperaturkorrekturwertes zur Kompensation von Ungleichförmigkeiten des Temperaturprofils der Gasströmung ein. Die hierfür erforderliche Korrelation zwischen Gasmassenstrom in der Turbinenaustrittsebene und Temperaturkorrekturwert wurde zuvor entweder durch Referenzmessungen oder mittels CFD-Berechnungen ermittelt und vorzugsweise in Form eines Kennfeldes abgelegt.
Nach der Bestimmung des Temperaturkorrekturwertes gemäß Verfahrensschritt 260 wird der in Verfahrensschritt 230 auf Basis des Messsignals ermittelte Temperaturwert in Verfahrensschritt 270 um den ermittelten Temperaturkorrekturwert korrigiert, um so eine über den Turbinenaustrittsquerschnitt massengemittelte, mittlere Temperatur zu erhalten. Die über den Turbinenaustrittsquerschnitt massengemittelte, mittlere Temperatur wird dann in Verfahrensschritt 280 an die Gasturbinenregelung übergeben und dient hier als Eingangsgröße für die Bestimmung von Regelwerten, beispielsweise für den der Brennkammer zuzuführenden Brennstoffmassenstrom.
Es zeigte sich, dass sich der Fehler bei der Bestimmung einer massengemittelten Temperatur am Turbinenaustritt durch die Bestimmung des Temperaturkorrekturwertes in Abhängigkeit des Gasmassenstroms in der Turbinenaustrittsebene auf einige wenige Kelvin oder bei sehr genauer Bestimmung des Gasmassenstroms am Turbinenaustritt sogar auf unter ein Kelvin reduzieren lässt. Die Regelung kann somit auf wesentlich präziseren massengemittelten Temperaturwerten aufsetzen, so dass regelungsseitig nur noch geringe Sicherheitsmargen vorzuhalten sind.

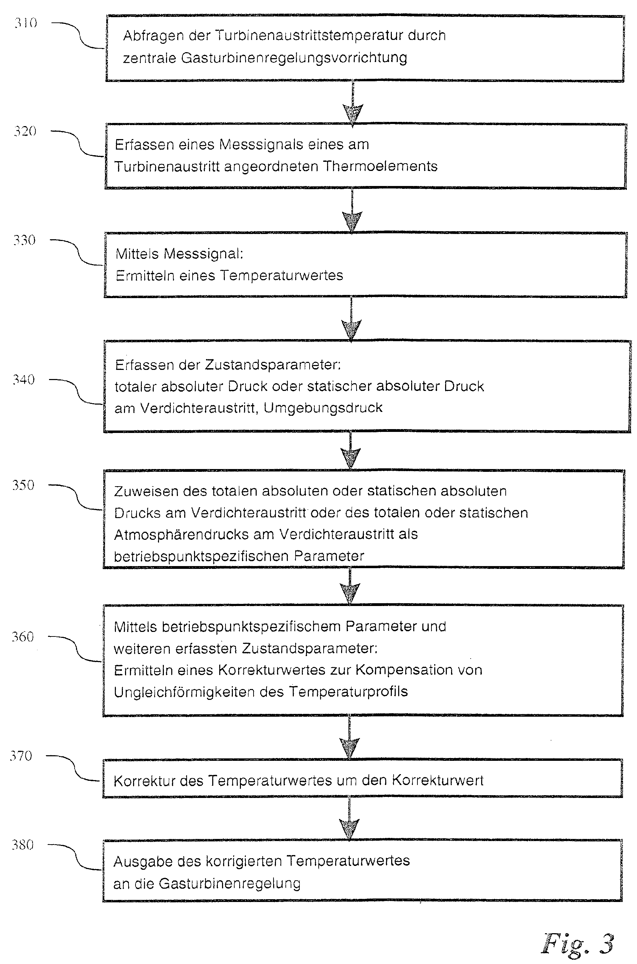

Das in Figur 3 dargestellte Ausführungsbeispiel unterscheidet sich von dem in Figur 2 dargestellten Ausführungsbeispiel darin, dass hier in Verfahrensschritt 350 als betriebspunktspezifischer Parameter nicht der Gasmassenstrom in der Turbinenaustrittsebene sondern der totale absolute oder statische absolute Druck am Verdichteraustritt der Gasturbine bestimmt und in Verfahrensschritt 360 als Eingangsgröße für die Bestimmung des Temperaturkorrekturwertes verwendet wird. Alternativ könnte hier auch der totale oder statische Atmosphärenüberdruck am Verdichteraustritt der Gasturbine als betriebspunktspezifischer Parameter verwendet werden.
Um den betriebspunktspezifischen Parameter 'totaler Druck am Verdichteraustritt der Gasturbine' zu erhalten, wird in Verfahrensschritt 340 der totale Druck am Verdichteraustritt der Gasturbine als Zustandsparameter der Gasturbine sensorisch erfasst, d.h. mittels einer in den Gasströmung hineinragenden Pitot-Sonde gemessen. Wird alternativ der statische Druck am Verdichteraustritt als betriebspunktspezifischer Parameter der Gasturbine verwendet, so ist hier der statische Druck am Verdichteraustritt als Zustandsparameter der Gasturbine zu messen. Letzteres kann in einfacher Weise mittels einer oder mehrerer Wandbohrungen vorgenommen werden.
Zusätzlich wird in Verfahrensschritt 340 aber auch noch der Umgebungsdruck als Zustandsparameter der Gasturbine sensorisch erfasst und zur Bestimmung des Korrekturwertes verwendet. Dies bedeutet, dass die Korrelation zur Bestimmung des Korrekturwertes auch beide Drücke als Eingangsgrößen vorzusehen hat.

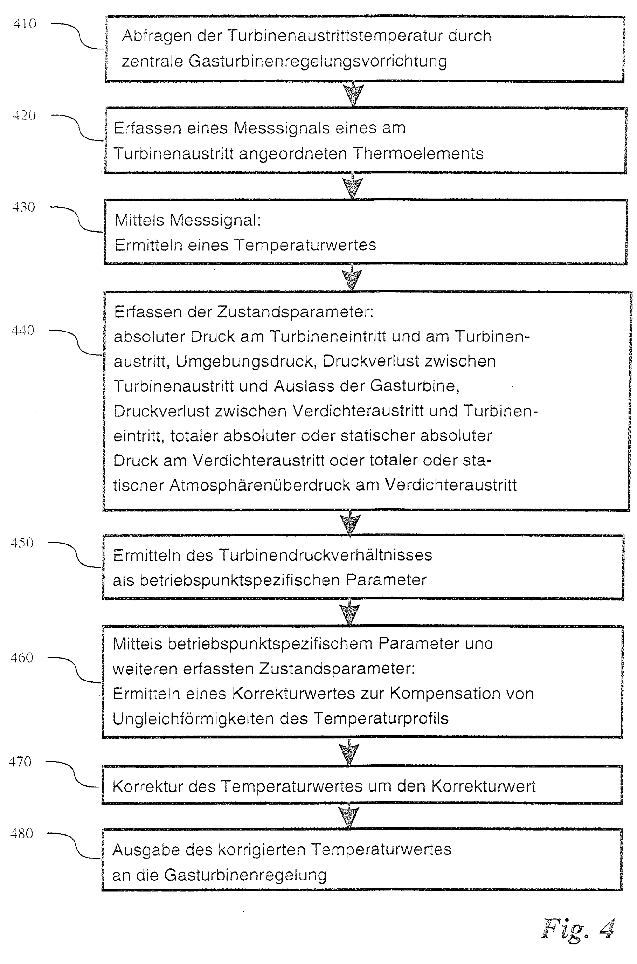

Das in Figur 4 dargestellte Ausführungsbeispiel unterscheidet sich von den in den Figur 2 und 3 dargestellten Ausführungsbeispielen darin, dass hier in Verfahrensschritt 450 als betriebspunktspezifischer Parameter das Turbinendruckverhältnis bestimmt und in Verfahrensschritt 460 als Eingangsgröße für die Bestimmung des Temperaturkorrekturwertes verwendet wird.
Um den betriebspunktspezifischen Parameter 'Turbinendruckverhättnis' zu erhalten, wird in Verfahrensschritt 440 der absolute Druck am Turbineneintritt der Gasturbine und der absolute Druck am Turbinenaustritt als Zustandsparameter der Gasturbine sensorisch erfasst, d.h. jeweils mittels wenigstens einer in der entsprechenden Ebene in den Gasströmung hineinragenden Pitot-Sonde gemessen.
Zusätzlich werden hier in Verfahrensschritt 440 aber auch noch der Umgebungsdruck, der Druckverlust der Gasströmung zwischen Turbinenaustritt und Auslass der Gasturbine, der Druckverlust der Gasströmung zwischen Verdichteraustritt und Turbineneintritt und der totale absolute oder statische absolute Druck am Verdichteraustritt oder der totale oder statische Atmosphärenüberdruck am Verdichteraustritt als Zustandsparameter der Gasturbine sensorisch erfasst und zur Bestimmung des Korrekturwertes verwendet.

Die in den Figuren 2 bis 4 dargestellten Verfahrensabläufe stellen nur beispielhafte Ausführungsformen der Erfindung dar, die von einem Fachmann durchaus in vielfältiger Weise ohne Weiteres modifiziert werden können, ohne den Erfindungsgedanken zu verlassen. So können beispielsweise zur sensorischen Erfassung der Temperatur am Turbinenaustritt eine Mehrzahl von Thermoelementen in der Turbinenaustrittsebene verteilt angeordnet sein und der Temperaturwert als Mittelwert der Signale der Thermoelemente bestimmt werden.

### Bezugszeichenliste

- 1-11: Ebenen einer Gasturbinenanlage nach ASME PTC 22-1997
- 100: Gasturbinenanlage
- 101: Verdichter
- 102: Brennkammer
- 103: Brennstoffzuleitung
- 104: Turbine
- 105: Welle zwischen Verdichter und Turbine
- 106: Abgasleitung
- 107: Welle zwischen Turbine und Generator
- 108: Generator
- 109: Netz
- 110: Stromversorgungsaggregat
- U: Umgebung

- 210 - 280: Verfahrensschritte einer ersten Ausführungsform der erfindungsgemäßen Verfahrens
- 310 - 380: Verfahrensschritte einer zweiten Ausführungsform der erfindungsgemäßen Verfahrens
- 410 - 480: Verfahrensschritte einer dritten Ausführungsform der erfindungsgemäßen Verfahrens

## Patentansprüche

1. Verfahren zur Bestimmung einer über einen Strömungsquerschnitt massengemittelten Temperatur einer Gasströmung einer Gasturbine, insbesondere im Teillastbetrieb der Gasturbine,
umfassend, im Bereich des Strömungsquerschnitts an wenigstens einer Position in der Gasströmung einen Temperaturwert der Gasströmung sensorisch zu erfassen,
einen Korrekturwert zur Korrektur des Temperaturwertes zur Kompensation von Ungleichförmigkeiten des Temperaturprofils der Gasströmung über den Strömungsquerschnitt als Funktion wenigstens eines betriebspunktspezifischen Parameters zu ermitteln,
und den sensorisch erfassten Temperaturwert um den Korrekturwert zu korrigieren, wobei der Strömungsquerschnitt der Turbinenaustritt der Gasturbine und die zu ermittelnde Temperatur die massengemittelte Turbinenaustrittstemperatur ist.

2. Verfahren gemäss Anspruch 1, umfassend, eine Mehrzahl von am Turbinenaustritt verteilten Einzeltemperaturwerten sensorisch zu erfassen und die erfassten Einzeltemperaturwerte zu einem massengemittelten Temperaturwert zu mitteln.

3. Verfahren gemäss einem der vorhergehenden Ansprüche, wobei der betriebspunktspezifische Parameter ein den Strömungsquerschnitt durchströmender Gasmassenstrom ist.

4. Verfahren gemäss einem der vorhergehenden Ansprüche, wobei der betriebspunktspezifische Parameter ein den Strömungsquerschnitt durchströmender, reduzierter Gasmassenstrom ist.

5. Verfahren gemäss einem der vorhergehenden Ansprüche, wobei der betriebspunktspezifische Parameter ein totaler absoluter oder statischer absoluter Druck am Verdichteraustritt der Gasturbine oder ein totaler oder statischer Atmosphärenüberdruck am Verdichteraustritt der Gasturbine ist.

6. Verfahren gemäss einem der vorhergehenden Ansprüche, wobei der betriebspunktspezifische Parameter ein Turbinendruckverhältnis ist.

7. Verfahren gemäss einem der Ansprüche 3 oder 4, weiterhin umfassend, wenigstens einen Zustandsparameter der Gasturbine vorzugsweise sensorisch zu erfassen und den den Strömungsquerschnitt durchströmenden Gasmassenstrom und/oder den den Strömungsquerschnitt durchströmenden reduzierten Gasmassenstrom auf Basis des wenigstens einen Zustandsparameters zu ermitteln.

8. Verfahren gemäss Anspruch 7, wobei als Zustandsparameter eine Wellendrehzahl der Gasturbine sensorisch erfasst wird.

9. Verfahren gemäss einem der Ansprüche 7 oder 8, wobei weiterhin wenigstens eine der folgenden Größen bzw. Größenpaare als Zustandsparameter erfasst und zur Bestimmung des den Strömungsquerschriitt durchströmenden Gasmassenstroms und/oder des den Strömungsquerschnitt durchströmenden reduzierten Gasmassenstroms verwendet wird/werden:
• Umgebungsdruck; und/oder
• Umgebungstemperatur und Verdichtereintrittstemperatur und/oder Umgebungstemperatur und relative oder absolute Feuchte der Umgebung; ünd/oder ,
• Eintrittsdruckverlust von Umgebung bis Verdichtereintritt; und oder
• Brennstoffmassenstrom; und/oder
• bei Eindüsung von Wasser innerhalb der Gasturbine die eingedüste Wassermenge; und/oder
• bei variablen Eintrittsleitschaufeln des Verdichters der Gasturbine die Position der variablen Eintrittsleitschaufeln.

10. Verfahren gemäss einem der Ansprüche 7 bis 9, wobei weiterhin wenigstens eine der folgenden Größen bzw. Größenpaare als Zustandsparameter erfasst und zur Bestimmung des den Strömungsquerschnitt durchströmenden reduzierten Massenstroms verwendet wird/werden:
• absoluter Druck am Turbinenaustritt; und/oder
• Druckverlust der Gasströmung zwischen Turbinenaustritt und Auslaß der Gasturbine.

11. Verfahren gemäss Anspruch 5, wobei der totale absolute oder statische absolute Druck am Verdichteraustritt der Gasturbine oder der totale oder statische Atmosphärenüberdruck am Verdichteraustritt der Gasturbine als Zustandsparameter der Gasturbine sensorisch erfasst und zur Bestimmung des Korrekturwertes verwendet wird.

12. Verfahren gemäss Anspruch 11, wobei zusätzlich der Umgebungsdruck als Zustandsparameter der Gasturbine sensorisch erfasst und zur Bestimmung des Korrekturwertes verwendet wird.

13. Verfahren gemäss Anspruch 6, wobei der absolute Druck am Turbineneintritt der Gasturbine und der absolute Druck am Turbinenaustritt der Gasturbine sensorisch erfasst und zur Bestimmung des Turbinendruckverhältnisses verwendet wird.

14. Verfahren gemäss Anspruch 13, wobei weiterhin wenigstens eine der folgenden Größen bzw. Größenpaare als Zustandsparameter sensorisch erfasst und zur Bestimmung des Korrekturwertes verwendet wird/werden:
• Umgebungsdruck; und/oder
• Druckverlust der Gasströmung zwischen Turbinenaustritt und Auslass der Gasturbine; und/oder
• Druckverlust der Gasströmung zwischen Verdichteraustritt und Turbineneintritt; und/oder
• totaler absoluter oder statischer absoluter Druck am Verdichteraustritt oder totaler oder statischer Atmosphärenüberdruck am Verdichteraustritt.

15. Regelungsvorrichtung zur Regelung einer Gasturbinenanlage, einer Gasturbine oder einer Gasturbogruppe , wobei die Regelungsvorrichtung zur Bestimmung einer über den Turbinenaustrittsquerschnitt massengemittelten Turbinenaustrittstemperatur gemäß dem Verfahren nach einem der Ansprüche 1 bis 14 betreibbar ist.

## Claims

1. Method for determination of a temperature, mass-averaged over a flow cross-section of a gas flow in a gas turbine, particularly during partial load operation of the gas turbine,
comprising the temperature value of the gas flow being sensory detected in the area of the flow cross-section at at least one position in the gas flow,
with a correction value being determined for correction of the temperature value in order to compensate for non-uniformities in the temperature profile of the gas flow over the flow cross-section as a function of at least one operating-point-specific parameter,
and the temperature value which has been sensory detected being corrected by the correction value, wherein the flow cross-section being the turbine outlet of the gas turbine, and the temperature to be determined being the mass-averaged turbine outlet temperature.

2. Method according to Claim 1, comprising a plurality of individual temperature values distributed across the turbine outlet being sensory detected , and the detected individual temperature values being averaged to form a mass-averaged temperature value.

3. Method according to one of the preceding claims, with the operating-point-specific parameter being a gas mass flow flowing through the flow cross-section.

4. Method according to one of the preceding claims, with the operating-point-specific parameter being a reduced gas mass flow flowing through the flow cross-section.

5. Method according to one of the preceding claims, with the operating-point-specific parameter being a total absolute or static absolute pressure at the compressor outlet of the gas turbine, or a total or static atmospheric overpressure at the compressor outlet of the gas turbine.

6. Method according to one of the preceding claims, with the operating-point-specific parameter being a turbine pressure ratio.

7. Method according to one of Claims 3 or 4, furthermore comprising at least one state parameter of the gas turbine being preferably sensory detected, and the gas mass flow flowing through the flow cross-section and/or the reduced gas mass flow flowing through the flow cross-section being determined on the basis of the at least one state parameter.

8. Method according to Claim 7, with a shaft rotation speed of the gas turbine being sensory determined as the state parameter.

9. Method according to one of Claims 7 or 8, with at least one of the following variables or variable pairs additionally being detected as a state parameter and being used to determine the gas mass flow flowing through the flow cross-section and/or the reduced gas mass flow flowing through the flow cross-section:
• environmental pressure; and/or
• environmental temperature and compressor inlet temperature and/or environmental temperature and relative or absolute humidity of the environment; and/or
• inlet pressure loss from the environment to the compressor inlet; and/or
• fuel mass flow; and/or
• when water is injected within the gas turbine, the injected amount of water; and/or
• if the gas turbine compressor has variable inlet guide vanes, the position of the variable inlet guide vanes.

10. Method according to one of Claims 7 to 9, with at least one of the following variables or variable pairs also being detected as a state parameter or state parameters and being used to determine the reduced mass flow flowing through the flow cross-section:
• absolute pressure at the turbine outlet; and/or
• pressure loss in the gas flow between the turbine outlet and the outlet of the gas turbine.

11. Method according to Claim 5, with the total absolute or static absolute pressure at the compressor outlet of the gas turbine or the total or static atmospheric overpressure at the compressor outlet of the gas turbine being sensory detected as a state parameter of the gas turbine and being used to determine the correction value.

12. Method according to Claim 11, with the environmental pressure additionally being sensory detected as a state parameter of the gas turbine, and being used to determine the correction value.

13. Method according to Claim 6, with the absolute pressure at the turbine inlet of the gas turbine and the absolute pressure at the turbine outlet of the gas turbine being sensory detected and being used to determine the turbine pressure ratio.

14. Method according to Claim 13, with at least one of the following variables or variable pairs additionally being sensory detected by as state parameters, and being used to determine the correction value:
• environmental pressure; and/or
• pressure loss in the gas flow between the turbine outlet and the outlet of the gas turbine; and/or
• pressure loss in the gas flow between the compressor outlet and the turbine inlet; and/or
• total absolute or static absolute pressure at the compressor outlet or total or static atmospheric overpressure at the compressor outlet.

15. Control apparatus for controlling a gas turbine installation, a gas turbine or a gas turbine set, in which case the control apparatus can be operated in order to determine the turbine outlet temperature, mass-averaged over the turbine outlet cross-section, using the method according to one of Claims 1 to 14.

## Revendications

1. Procédé pour déterminer une température moyennée en masse sur une section transversale d'écoulement, d'un flux de gaz d'une turbine à gaz, en particulier en mode de charge partielle de la turbine à gaz,
comprenant,
une valeur de température du flux de gaz devant être détectée par le biais de capteurs, dans la région de la section transversale d'écoulement au niveau d'au moins une position dans le flux de gaz,
une valeur de correction pour corriger la valeur de température afin de compenser des irrégularités du profil de température du flux de gaz sur la section transversale d'écoulement, devant être déterminée en fonction d'au moins un paramètre spécifique au point de fonctionnement,
et la valeur de température détectée par le biais de capteurs devant être corrigée de la valeur de correction, la section transversale d'écoulement étant la sortie de la turbine de la turbine à gaz et la température déterminée étant la température moyennée en masse à la sortie de la turbine.

2. Procédé selon la revendication 1, comprenant une pluralité de valeurs de températures individuelles réparties à la sortie de la turbine, devant être détectées par des capteurs, et les valeurs de températures individuelles détectées devant être moyennées pour fournir une valeur de température moyennée en masse.

3. Procédé selon l'une quelconque des revendications précédentes, dans lequel le paramètre spécifique au point de fonctionnement est un débit massique de gaz passant par la section transversale d'écoulement.

4. Procédé selon l'une quelconque des revendications précédentes, dans lequel le paramètre spécifique au point de fonctionnement est un débit massique de gaz réduit passant par la section transversale d'écoulement.

5. Procédé selon l'une quelconque des revendications précédentes, dans lequel le paramètre spécifique au point de fonctionnement est une pression absolue totale ou absolue statique à la sortie du compresseur de la turbine à gaz ou une surpression atmosphérique totale ou statique à la sortie du compresseur de la turbine à gaz.

6. Procédé selon l'une quelconque des revendications précédentes, dans lequel le paramètre spécifique au point de fonctionnement est un rapport de pression de la turbine.

7. Procédé selon l'une quelconque des revendications 3 ou 4, comprenant en outre au moins un paramètre d'état de la turbine à gaz devant être détecté de préférence par le biais de capteurs et le débit massique de gaz passant par la section transversale d'écoulement et/ou le débit massique de gaz réduit passant par la section transversale d'écoulement devant être déterminés sur la base de l'au moins un paramètre d'état.

8. Procédé selon la revendication 7, dans lequel une vitesse de rotation d'arbre de la turbine à gaz est détectée par le biais de capteurs en tant que paramètre d'état.

9. Procédé selon l'une quelconque des revendications 7 ou 8, dans lequel en outre au moins l'une des grandeurs ou paires de grandeurs suivantes sont détectées en tant que paramètre d'état et sont utilisées pour déterminer le débit massique de gaz passant par la section transversale d'écoulement et/ou le débit massique de gaz réduit passant par la section transversale d'écoulement :
- la pression ambiante ; et/ou
- la température ambiante et la température à l'entrée du compresseur et/ou la température ambiante et l'humidité relative ou absolue de l'environnement ; et/ou
- la perte de pression d'entrée de l'environnement jusqu'à l'entrée du compresseur ; et/ou
- le débit massique de combustible ; et/ou
- en cas d'injection d'eau à l'intérieur de la turbine à gaz, la quantité d'eau injectée ; et/ou
- en cas d'aubes directrices d'entrée variables du compresseur de la turbine à gaz, la position des aubes directrices d'entrée variables.

10. Procédé selon l'une quelconque des revendications 7 à 9, dans lequel en outre au moins l'une des grandeurs ou paires de grandeurs suivantes sont détectées en tant que paramètre d'état et sont utilisées pour déterminer le débit massique réduit passant par la section transversale d'écoulement :
- la pression absolue à la sortie de la turbine ; et/ou
- la perte de pression de flux de gaz entre la sortie de la turbine et l'échappement de la turbine à gaz.

11. Procédé selon la revendication 5, dans lequel la pression absolue totale ou la pression absolue statique à la sortie du compresseur de la turbine à gaz ou la surpression atmosphérique totale ou statique à la sortie du compresseur de la turbine à gaz sont détectées en tant que paramètre d'état de la turbine à gaz et sont utilisées pour déterminer la valeur de correction.

12. Procédé selon la revendication 11, dans lequel en outre la pression environnante est détectée par le biais de capteurs en tant que paramètre d'état de la turbine à gaz et est utilisée pour déterminer la valeur de correction.

13. Procédé selon la revendication 6, dans lequel la pression absolue à l'entrée de la turbine de la turbine à gaz et la pression absolue à la sortie de la turbine de la turbine à gaz sont détectées par le biais de capteurs et sont utilisées pour déterminer le rapport de pression de la turbine.

14. Procédé selon la revendication 13, dans lequel en outre au moins l'une des grandeurs ou paires de grandeurs suivantes sont détectées par le biais de capteurs en tant que paramètre d'état et sont utilisées pour déterminer la valeur de correction :
- la pression environnante ; et/ou
- la perte de pression de flux de gaz entre la sortie de la turbine et l'échappement de la turbine à gaz ; et/ou
- la perte de pression du débit de gaz entre la sortie du compresseur et l'entrée de la turbine ; et/ou
- la pression absolue totale ou absolue statique à la sortie du compresseur ou la surpression atmosphérique totale ou statique à la sortie du compresseur.

15. Dispositif de régulation pour la régulation d'une installation de turbine à gaz, d'une turbine à gaz ou d'un turbogroupe à gaz, le dispositif de régulation pouvant fonctionner pour déterminer une température moyennée en masse à la sortie de la turbine, sur la section transversale de sortie de la turbine selon le procédé selon l'une quelconque des revendications 1 à 14.
